# EUROPEAN PATENT SPECIFICATION

(11) **EP 1 537 036 B1**
(45) Date of publication and mention of the grant of the patent: **14.12.2005**
(21) Application number: 03736404.9
(22) Date of filing: 18.06.2003
(51) Int. Cl.: B65G 35/00, B62M 27/02, B66F 11/04

(54) **TRANSPORT DEVICE WITH SLAVE CONTROL**
TRANSPORTVORRICHTUNG MIT UNTERGEORDNETER STEUERUNG
DISPOSITIF DE TRANSPORT AVEC SERVOCOMMANDE

(30) Priority: 24.06.2002 SE 0201928
(43) Date of publication of application: 08.06.2005
(73) Proprietor: Maxmove Industrier AB, 916 31 Bjurholm (SE)
(72) Inventor: SJÖBERG, Michael, S-151 39 Södertälje (SE); BERNTSSON, Peter, S-905 92 Ume (SE)
(74) Representative: Estreen, Lars J.F.
(86) International application number: PCT/SE2003/001039
(87) International publication number: WO 2004/000700

(56) References cited:
- DE-A1- 3 330 993

## Description

### TECHNICAL FIELD

The present invention relates generally to a device for the transport of materials and more specifically to a device in which a wheeled carrier is made to follow a course by using slave control.

### BACKGROUND

When materials are moved by means of, for example, a vehicle or conveyor, it is sometimes an advantage to bring about the movement by applying a force to the vehicle or the component instead of controlling it by means of a control mechanism. Examples of such applications are the transport and positioning of materials for a moving assembly line. When components are positioned, it is an advantage for it to be possible to guide the component into position by applying a force to it. With the proposed solution, the component automatically follows the movements of the assembly line during and after mounting thereof.

In the handling described above, use is today made of, for example, air-cushion-supported conveyors. These can be moved with unlimited mobility but they have no servo function, which leads to great strain during starting and deceleration when great masses are transported.

### SUMMARY OF THE INVENTION

One object of the invention is to produce a device which makes it possible to apply only a small force in the desired transport direction, which leads to a servo function being activated, the servo action being reversed and changing over to decelerating the mass of the vehicle when the force applied ceases.

The invention is based on the insight that a transport device can be arranged with a driving part and a carrying part which are movable in relation to one another, sensors which measure the relative position of the parts making possible a slave-control function for driving the transport device in the desired direction.

According to the invention, a transport device as defined in Claim 1 is therefore produced.

Further preferred embodiments are defined by the subclaims.

The abovementioned problems of the prior art are solved by the transport device according to the invention. By virtue of the fact that a relatively small force which is applied to the carrying part can be registered, which leads to the driving means of the carrying part driving in the desired direction, a device of which the movement can be controlled in an exact way is produced.

### BRIEF DESCRIPTION OF THE DRAWINGS

The invention will be described in greater detail as an example, with reference to accompanying drawings, in which:
Fig. 1a shows a side view of a transport device according to the invention;
Fig. 1b shows a top view of the transport device shown in Fig. 1a;
Fig. 1c shows a transparent perspective view of the transport device shown in Fig. 1a;
Fig. 1d shows a simplified block diagram of the parts which make up the driving system for the transport device according to the invention;
Figs 2a-c show views corresponding to those shown in Figs 1a-c but when a force is applied to the carrying part of the transport device in a longitudinal direction;
Figs 3a-c show views corresponding to those shown in Figs 1a-c but when a force is applied to the carrying part of the transport device in a transverse direction;
Figs 4a-c show views corresponding to those shown in Figs 1a-c but when a force is applied to the carrying part of the transport device in a diagonal direction;
Figs 5a-c show views corresponding to those shown in Figs 1a-c but when a force is applied to the carrying part of the transport device which results in a turning movement of the transport device;
Figs 6a-c show views corresponding to those shown in Figs 1a-c but when a force is applied to the carrying part of the transport device which results in a rotation of the transport device;
Fig. 7a shows an overall view of the transport device according to the invention in an alternative embodiment;
Fig. 7b shows a detailed view of the link between the transport device shown in Fig. 7a and an aircraft, and
Fig. 7c is a view similar to that in Fig. 7b but showing an alternative embodiment of the transport device according to the invention.

### EMBODIMENTS

Preferred embodiments of a transport device according to the invention will be described below. In the description, for the purpose of clarification but not limitation, specific details will be shown in order to afford a thorough understanding of the present invention. The expert will nevertheless understand that the invention can be used in other embodiments which differ from these specific details. Specific directions, such as up, down, left, right etc., are also indicated in the description. It is to be understood that these directions only refer to what is shown in the figures and are therefore not limiting as far as the practical applications of the invention are concerned.

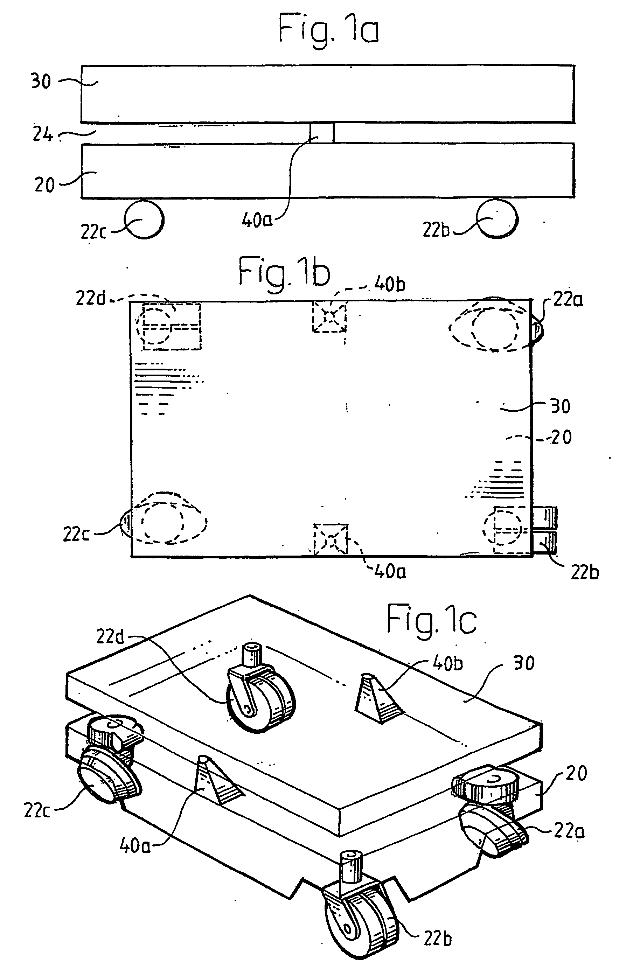

Reference is initially made to Figs 1a-c. Fig. 1a shows a simplified side view of a transport device, designated generally by 10, which is in the rest position, that is to say no external force is applied to it. The transport device comprises a driving part 20 and, arranged above the driving part, a carrying or fixture part 30. The two parts 20, 30 are interconnected with sensors, one 40a of which is shown in Fig. 1a. In the preferred embodiment, the sensors are in the form of strain gauges.

The driving part is adapted to be driven on a surface by using four wheels 22a-d (see Fig. 1b). The wheels are preferably of the type which is described in international patent publication WO99/54190, which is included herein by reference. Therefore, two diagonally opposite wheels 22a, 22c are driving wheels which can be swivelled into the desired position while the two other wheels 22b, 22d are swivelling but not driving wheels. By virtue of this, the driving part can drive in essentially any direction parallel to the surface.

The driving and carrying parts are separated from one another by a dividing plane 24 consisting of an interspace, the size of which has been exaggerated in the figures for the sake of clarity. The dividing plane is essentially parallel to the surface on which the vehicle is intended to run, and the connection between the driving part and the carrying part can be brought about in various ways. Common to these is that the levels can move in relation to one another in directions which are parallel to the surface on which the transport device is moved, and, in the preferred embodiment, the carrying part rests on rubber blocks which are arranged on the driving part. This allows small, but readily detectable relative movements between the driving part and the carrying part, which are used for the desired servo function.

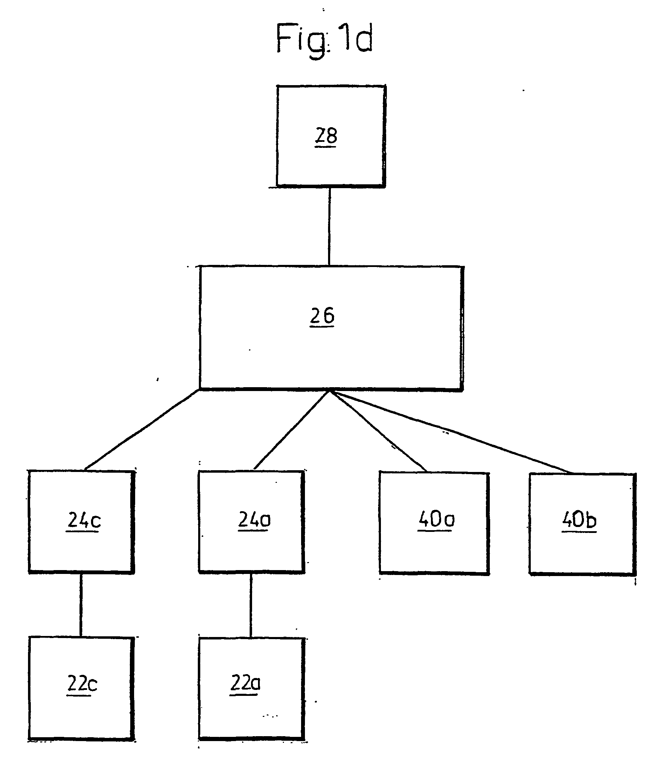

Fig. 1d shows the parts which make up the driving system. The driving wheels 22a, 22c are driven by respective driving arrangements 24a, 24c consisting of an electric motor with associated mechanics and electronics. The driving arrangements are connected to a central unit 26 consisting of a microprocessor and associated electronics. The sensors 40a, 40b are also connected to this central unit. Finally, there is a display/input unit 28 which is connected to the central unit and serves as a user interface.

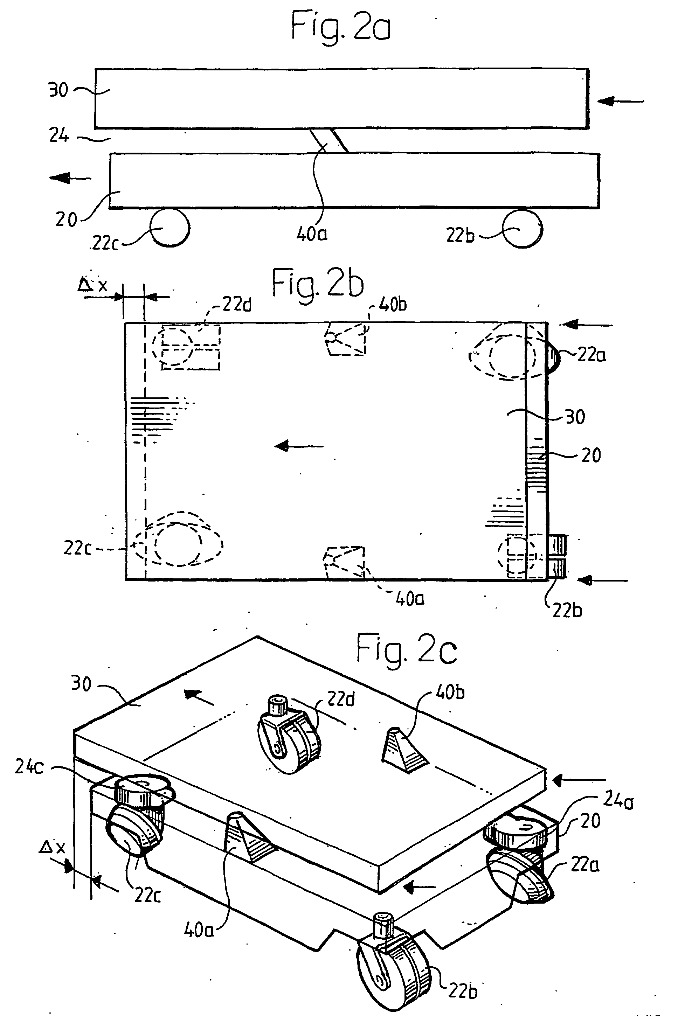

When a force is applied to the carrying part in any direction, a relative movement between the driving and carrying parts occurs, as mentioned, which results in a positional difference between them. Figs 2a-c show the effect of a force being applied to the carrying part towards the left, as can be seen from the arrows. The carrying part is imparted a movement which instantaneously results in a positional difference Δx in the longitudinal direction of the transport device. This positional difference is detected by means of the sensors 40a, 40b, and information about this is sent to the central unit which uses the positional information as a basis for driving commands which are sent to the driving arrangements 24a, 24c. In the example shown in Figs 2a-c, the wheels therefore start to drive towards the left in the figure.

When the wheels start to drive, the driving part 20 strives to take up the same position as the carrying part 30, that is to say to reduce Δx. If the force which is applied to the carrying part is static, which means, for example, that the user who pushes the carrying part does not move, the driving part will move until Δx is zero while the absolute position of the carrying part does not change. When Δx is zero, the driving wheels cease driving, and the transport device has been moved to a new position.

If, on the other hand, the force which is applied to the carrying part is dynamic, that is to say the user who pushes the carrying part moves in the same direction as the force, Δx remains greater than zero as long as the user moves. Only when the driving part is allowed to "catch up with" the carrying part does the driving cease.

As mentioned previously, the positional difference between the driving part and the carrying part is used as a parameter for the commands which the central unit sends to the driving arrangements. This means that the greater the force applied, the greater Ax is. A greater value of Δx means higher driving speed, as a result of which the transport device moves at different speeds depending on how hard the user pushes the carrying part. When pushing ceases, the transport device stops essentially instantaneously.

In other words, the driving part and the carrying part are made, via for example spring-loading, to strive towards a neutral point at which the servo action ceases, and, as soon as the applied force ceases, the servo action changes over from driving aid to deceleration aid.

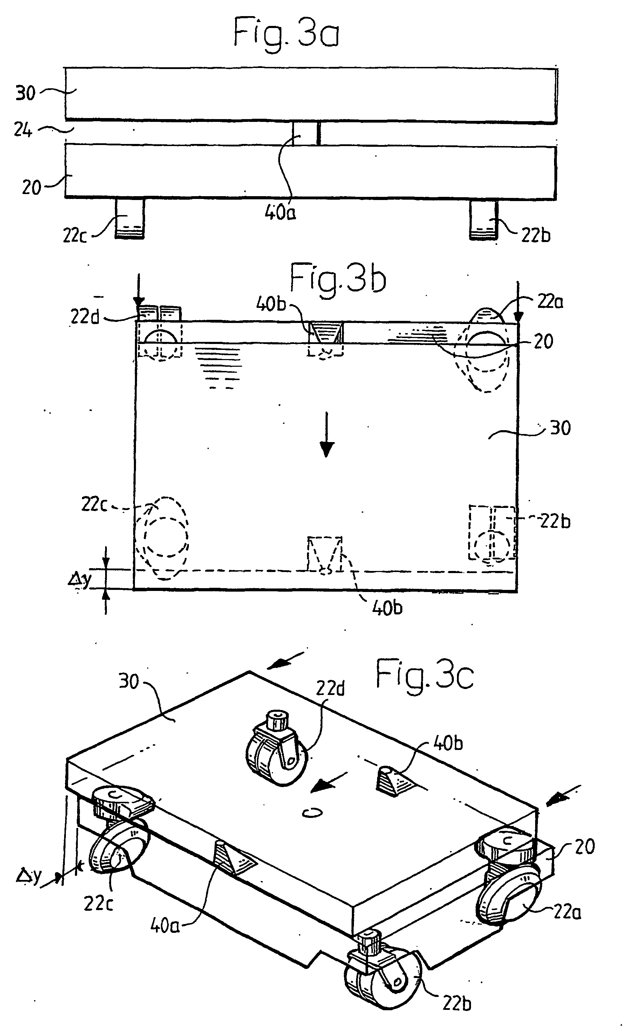

The movement direction does not have to be limited to that shown in Figs 2a-c. Figs 3a-c show the effect of a force being applied to the carrying part in the transverse direction of the transport device. This results in a positional difference Δy which in turn brings about a movement transverse to the longitudinal direction of the transport device.

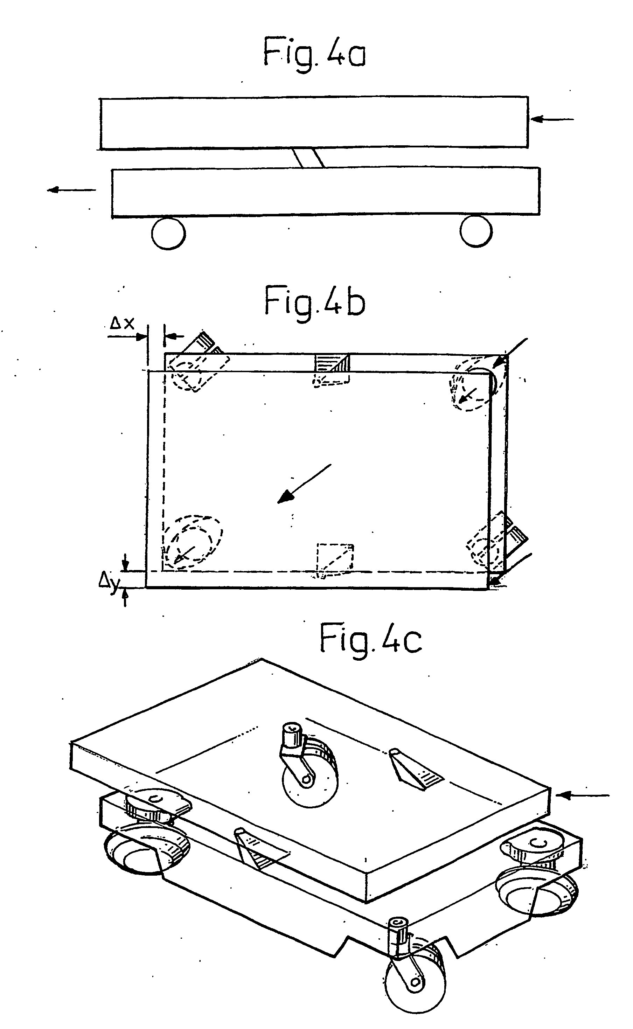

A combination of these movements is of course possible. Figs 4a-c show the situation when the resulting force is directed diagonally, that is to say consists of a component in both the longitudinal direction and the transverse direction. The sensors 40a, 40b register the relative positional differences, Δx and Δy, and the central unit 26 uses this information in order to bring about driving in the diagonal direction.

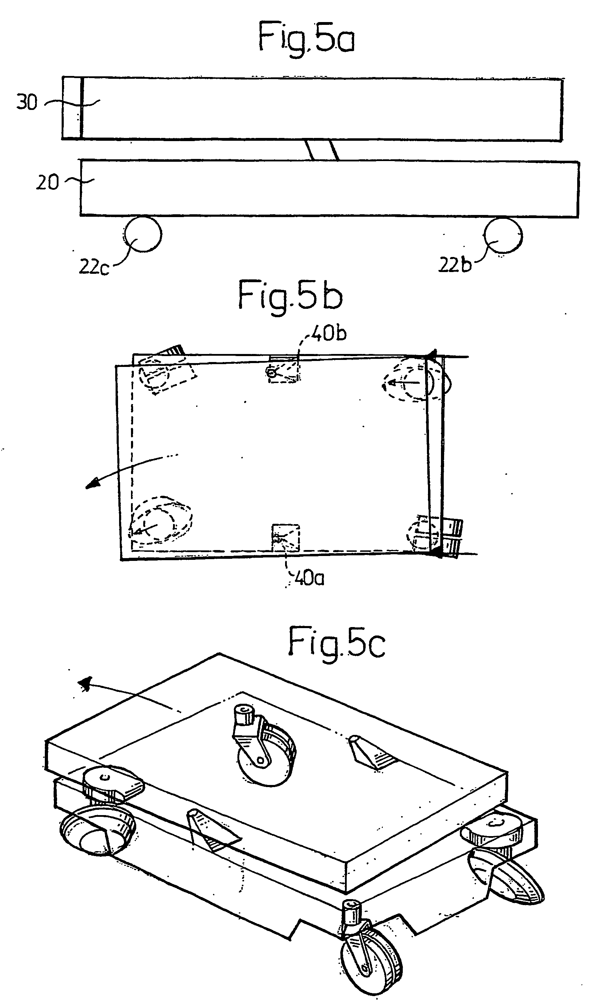

In the driving examples described above, the two sensors 40a, 40b detected the same relative positional difference, that is to say the relative movement between the driving part and the carrying part consisted exclusively of a translational movement, which has not resulted in any turns, that is to say any rotational movement. Figs 5a-c show an example of when the transport device turns. Fig. 5b shows how a smaller force is applied to the lower part of the carrying part than the upper part. This results in the lower sensor 40a registering a smaller positional difference than the upper sensor 40b. This positional information results in the central unit ordering the upper, right wheel to drive in one direction and the lower, left wheel 22c in another direction. The combined result is a turning movement as shown by the arrow on the left in Figure 5b.

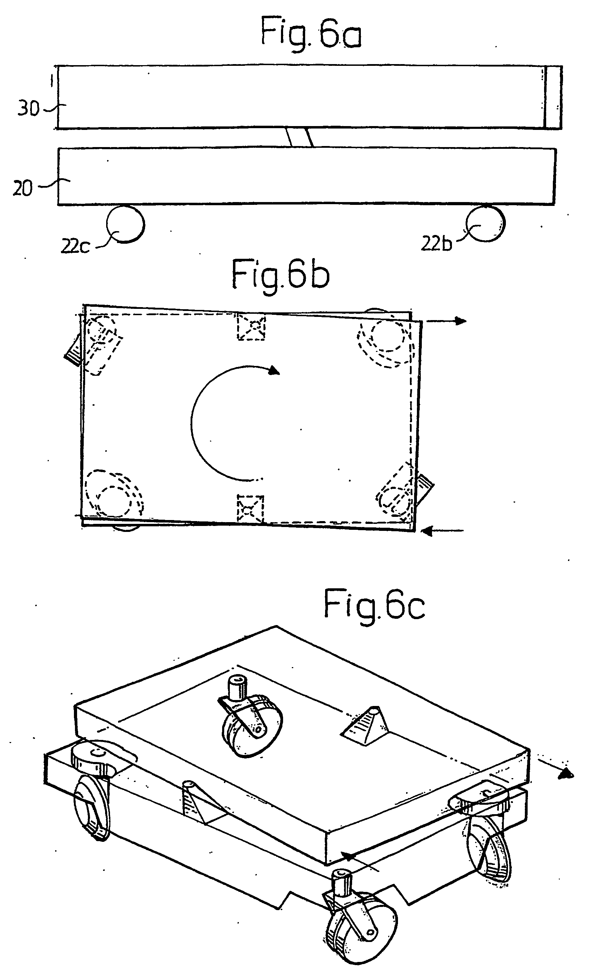

A pure rotational movement can also be brought about, as can be seen from the example shown in Figs 6a-c. Fig. 6b shows how a force directed towards the left is applied to the lower part of the carrying part while a force of the same magnitude directed towards the right is applied to the upper part. This results in the two driving wheels driving in opposite directions, which brings about a pure rotational movement.

It may be an advantage to make the transport device drive more easily in one direction than another, which can be brought about simply with the transport device according to the invention. Such programming of characteristics can be brought about by means of the input unit 28. An example of such programming may be that a relative positional difference in the transverse direction, that is to say Δy, is made to have less influence on the driving than a relative positional difference in the longitudinal direction, that is to say Ax. This can also be brought about purely mechanically by virtue of the applied force necessary to bring about a relative positional difference being different in different directions. However, the basic principle of the system is the servo action in all directions and also possible rotation about a centre or one or more other selected point(s).

The proposed solution affords a number of advantages, the most important of which are described below. The transport device according to the invention affords the possibility of moving large masses in the most logical way - applying a force directly to the mass, the servo action moving the mass in this direction as long as the force is applied. The possibility of using wheel-mounted conveyors for materials for moving assembly lines is also afforded. Movement can be effected with very great precision compared with current corresponding solutions of the air-cushion type.

A preferred embodiment of a transport device according to the invention has been described. The expert in the technical field concerned will understand that this can be varied within the scope of the accompanying patent claims. It has been mentioned that the driving and carrying parts are preferably connected by means of rubber blocks, to which other components with corresponding elastic properties are equivalent. Alternatively, slide rails can be arranged in, for example, the longitudinal direction and the transverse direction, the parts being returned to the same relative position by means of, for example, springs.

The sensors 40a, 40b have been described as strain gauges. Alternative sensors are of course also possible, such as optical sensors or mechanical sensors which function as a joystick. The positioning and number of the sensors can also be varied as required, for example in order to detect more complex movements.

The driving in the preferred embodiment is effected by wheels. Other types of driving means are of course also possible, such as driving belts. The positioning and number of the driving means can also be varied as required. Therefore, for example, one driving wheel can be combined with two or more non-driving wheels, three or more driving wheels can be combined with an appropriate number of non-driving wheels, or there can be no non-driving wheels. In the case of two driving wheels, they can be positioned diagonally, as in the embodiment described, or they can be positioned along the same side. As a further alternative, one or more wheel(s) can be supplemented by an air-cushion arrangement.

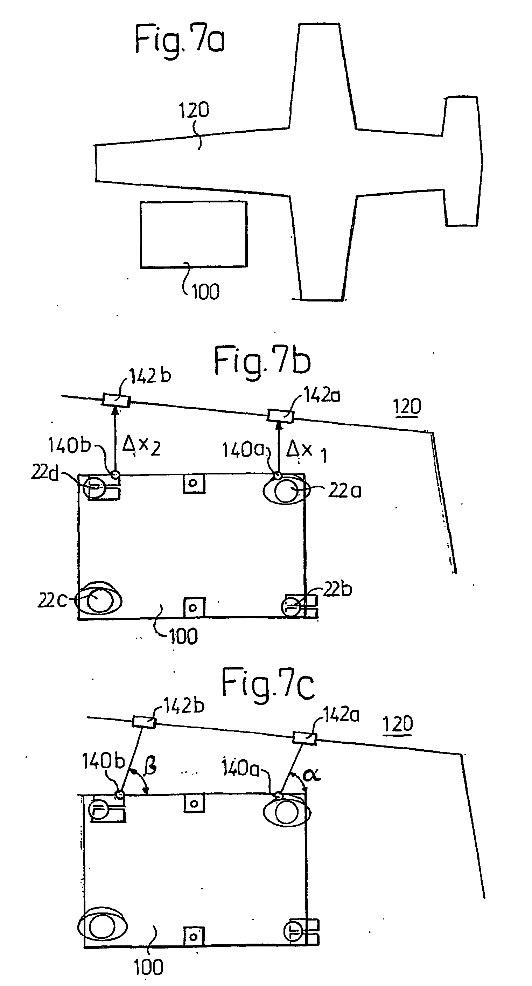

Fig. 7a shows an alternative embodiment of a transport device 100, which is slaved to another object, shown in the figure as an aircraft 120. In this case, the positional difference measured is that between a transport device 100 in the form of a working platform and the aircraft 120. This is brought about by means of two sensors 140a, b which are arranged on one side of the transport device (see Fig. 7b). These can be, for example, laser sensors which work against respective reflective surfaces 142a, b on the aircraft body. In this way, it is possible to keep track of the relative distance Δx1, Δx2 between the aircraft and the transport device.

In this case, the slave control takes place in the following way. In a desired relative position of transport device and aircraft, the sensors and control system are zeroed. This position therefore corresponds to that shown in Figs 1a-c for the first embodiment. If the aircraft begins to move from this position, this will be detected by the sensors 140a, b. The deviation from the relative positional difference in the starting position serves as an input signal for the control system of the transport device, which, in the same way as in the first embodiment, tries to drive the transport in a direction which returns it to the starting position relative to the plane. In this case, the transport device is slaved to the other object, shown as an aircraft.

It will be understood that measurement can be carried out in ways other than that shown in the figures. For example, it is possible to have a telescoping arrangement which is arranged between the aircraft and the transport device and with which the relative distance between them is measured. Furthermore, in addition to or instead of pure distance measurement, it is also possible to use angular measurement, that is to say how the aircraft has moved relative to the transport device is measured in another dimension. Fig. 7c indicates two angles α and β, and a relative positional difference can be calculated by means of these angles.

In the embodiment which has been described with reference to Figs 7a-c, an aircraft has been used as an example of the object of which the transport device follows the movement. This is of course only an example, and an alternative is, for example, a car on a production line.

## Claims

1. A transport device comprising:
- a driving part (20) with at least one driving means (22a-d) for moving said driving part in a number of directions on a surface,
- a carrying part (30) arranged above said driving part and adapted to carry a load,
**characterized in that**
- said driving part and said carrying part are movable in relation to one another in a number of directions essentially parallel to said surface,
- said transport device comprising a measuring means (40a, 40b) for measuring a positional difference (Δx, Δy) between said driving part and said carrying part, and
- said driving means being adapted to drive in directions which depend on said positional difference between said driving part and said carrying part.

2. The transport device according to Claim 1, in which said driving means comprises at least one wheel (22a, 22c).

3. The transport device according to Claim 1, in which said driving means comprises at least one driving belt.

4. The transport device according to any one of Claims 1-3, in which said measuring means comprises strain gauges (40a, 40b).

5. The transport device according to any one of Claims 1-3, in which said measuring means comprises optical sensors (40a, 40b).

6. The transport device according to any one of Claims 1-3, in which said measuring means comprises a joystick arrangement.

7. The transport device according to any one of Claims 1-6, comprising elastic spacers, preferably rubber blocks, arranged between said driving part (20) and said carrying part (30).

8. The transport device according to one of Claims 1-6, comprising slide rails arranged between said driving part (20) and said carrying part (30).

9. The transport device according to any one of Claims 1-8, in which said driving means (22a, 22c, 24a, 24c) are adapted to drive at a speed which is essentially proportional to said positional difference (Δx, Δy).

10. The transport device according to any one of Claims 1-9, in which said driving means (22a, 22c, 24a, 24c) are adapted to drive at a greater speed in a first direction (Δx) than in a second direction (Δy) for the same positional difference.

## Patentansprüche

1. Transportvorrichtung umfassend:
- einen Antriebsteil (20) mit mindestens einem Antriebsmittel (22a-d) zum Bewegen des Antriebsteils in einer Anzahl von Richtungen auf einer Oberfläche,
- einen transportierenden Teil (30), welcher über dem Antriebsteil angeordnet ist und zum Transportieren einer Last angepasst ist,
**dadurch gekennzeichnet, dass**
- der Antriebsteil und der transportierende Teil relativ zueinander in einer Anzahl von Richtungen im Wesentlichen parallel zu der Oberfläche bewegbar sind,
- der transportierende Teil ein Messmittel (40a, 40b) zum Messen eines Positionsunterschieds (Δx, Δy) zwischen dem Antriebsteil und dem transportierenden Teil umfasst, und
- der Antriebsteil angepasst ist, in Richtungen anzutreiben, welche von dem Positionsunterschied zwischen dem Antriebsteil und dem transportierenden Teil abhängen.

2. Transportvorrichtung nach Anspruch 1, wobei das Antriebsmittel mindestens ein Rad (22a, 22c) umfasst.

3. Transportvorrichtung nach Anspruch 1, wobei das Antriebsmittel mindestens ein Antriebsband umfasst.

4. Transportvorrichtung nach irgendeinem der Ansprüche 1 bis 3, wobei das Messmittel Dehnungsmesser (40a, 40b) umfasst.

5. Transportvorrichtung nach irgendeinem der Ansprüche 1 bis 3, wobei das Messmittel optische Sensoren (40a, 40b) umfasst.

6. Transportvorrichtung nach irgendeinem der Ansprüche 1 bis 3, wobei das Messmittel eine Joystickanordnung umfasst.

7. Transportvorrichtung nach irgendeinem der Ansprüche 1 bis 6, umfassend elastische Abstandshalter, vorzugsweise Gummiblöcke, welche zwischen dem Antriebsteil (20) und dem transportierenden Teil (30) angeordnet sind.

8. Transportvorrichtung nach einem der Ansprüche 1 bis 6, umfassend Gleitschienen, welche zwischen dem Antriebsteil (20) und dem transportierenden Teil (30) angeordnet sind.

9. Transportvorrichtung nach irgendeinem der Ansprüche 1 bis 8, wobei die Antriebsmittel (22a, 22c, 24a, 24c) angepasst sind, bei einer Geschwindigkeit anzutreiben, welche im Wesentlichen proportional zu dem Positionsunterschied (Δx, Δy) ist.

10. Transportvorrichtung nach irgendeinem der Ansprüche 1 bis 9, wobei die Antriebsmittel (22a, 22c, 24a, 24c) angepasst sind, bei einer größeren Geschwindigkeit in eine erste Richtung (Δx) als in eine zweite Richtung (Δy) bezüglich desselben Positionsunterschieds anzutreiben.

## Revendications

1. Dispositif de transport comprenant :
- une partie d'entraînement (20) avec au moins un moyen d'entraînement (22a-d) destiné à déplacer ladite partie d'entraînement dans un nombre de directions sur une surface,
- une partie de transport (30) agencée au-dessus de ladite partie d'entraînement et adaptée pour porter une charge,
**caractérisé en ce que**
- ladite partie d'entraînement et ladite partie de transport sont mobiles l'une par rapport à l'autre dans un nombre de directions essentiellement parallèles à ladite surface,
- ledit dispositif de transport comprend un moyen de mesure (40a, 40b) destiné à mesurer une différence de position (Δx, Δy) entre ladite partie d'entraînement et ladite partie de transport, et
- ledit moyen d'entraînement est adapté pour entraîner le dispositif dans des directions qui dépendent de ladite différence de position entre ladite partie d'entraînement et ladite partie de transport.

2. Dispositif de transport selon la revendication 1, dans lequel ledit moyen d'entraînement comprend au moins une roue (22a, 22c).

3. Dispositif de transport selon la revendication 1, dans lequel ledit moyen d'entraînement comprend au moins une courroie d'entraînement.

4. Dispositif de transport selon l'une quelconque des revendications 1 à 3, dans lequel ledit moyen de mesure comprend des jauges de contrainte (40a, 40b).

5. Dispositif de transport selon l'une quelconque des revendications 1 à 3, dans lequel ledit moyen de mesure comprend des capteurs optiques (40a, 40b).

6. Dispositif de transport selon l'une quelconque des revendications 1 à 3, dans lequel ledit moyen de mesure comprend un agencement à joystick.

7. Dispositif de transport selon l'une quelconque des revendications 1 à 6, comprenant des entretoises élastiques, de préférence des blocs en caoutchouc, agencées entre ladite partie d'entraînement (20) et ladite partie de transport (30).

8. Dispositif de transport selon l'une quelconque des revendications 1 à 6, comprenant des glissières agencées entre ladite partie d'entraînement (20) et ladite partie de transport (30).

9. Dispositif de transport selon l'une quelconque des revendications 1 à 8, dans lequel lesdits moyens d'entraînement (22a, 22c, 24a, 24c) sont adaptés pour entraîner le dispositif à une vitesse qui est essentiellement proportionnelle à ladite différence de position (Δx, Δy).

10. Dispositif de transport selon l'une quelconque des revendications 1 à 9, dans lequel lesdits moyens d'entraînement (22a, 22c, 24a, 24c) sont adaptés pour entraîner le dispositif à une vitesse plus élevée dans une première direction (Δx) que dans une seconde direction (Δy) pour la même différence de position.
